# EUROPÄISCHE PATENTSCHRIFT

(11) **EP 3 442 788 B1**
(45) Veröffentlichungstag und Bekanntmachung des Hinweises auf die Patenterteilung: **08.04.2026**
(21) Anmeldenummer: 17703148.1
(22) Anmeldetag: 06.02.2017
(51) Int. Cl.: B32B 5/18, B32B 27/06, B32B 27/08, B32B 27/20, B32B 27/32, B32B 27/36, B32B 27/40, B60R 21/16

(54) **FOLIENLAMINAT UND INNENVERKLEIDUNGSTEIL FÜR KRAFTFAHRZEUGE**
FILM LAMINATE AND INTERIOR TRIM PART FOR MOTOR VEHICLES
STRATIFIÉ DE FEUILLES ET PARTIE D'HABILLAGE INTÉRIEUR POUR VÉHICULES À MOTEUR

(30) Priorität: 15.04.2016 DE 102016206340
(43) Veröffentlichungstag der Anmeldung: 20.02.2019
(73) Patentinhaber: Benecke-Kaliko GmbH, 30419 Hannover (DE)
(72) Erfinder: HÜLSEWEDE, Volker, 73326 Deggingen (DE); MANI, Joseph, 73054 Eislingen (DE); WEBER, Daniel, 73035 Göppingen (DE)
(74) Vertreter: Preusser, Andrea
(86) Internationale Anmeldenummer: PCT/EP2017/052483
(87) Internationale Veröffentlichungsnummer: WO 2017/178127

(56) Entgegenhaltungen:
- EP-A1- 2 117 881
- WO-A1-2016/008613
- DE-A1- 102006 016 724
- DE-A1- 102011 053 224

## Beschreibung

Die Erfindung betrifft ein Folienlaminat, umfassend zumindest eine ein- oder mehrlagig ausgebildete, extrudierte Dekorschicht mit einer Lackschicht auf der Oberseite und einer Schaumschicht auf der Unterseite. Ferner betrifft die Erfindung Innenverkleidungsteile von Kraftfahrzeugen, die mit einem solchen Folienlaminat versehen sind.

Im Bereich der dekorativen Folienlaminate für den automobilen Innenraum werden im Moment im Wesentlichen zwei Konstruktionen verwendet.

Für Anwendungen und Bauteile, in denen das Folienlaminat in nachgeschalteten thermischen Umformprozessen einer starken Verstreckung (z. B. bis zu 300 %) unterworfen ist, werden bevorzugt kompakte Folienkonstruktionen, die aus mehreren Schichten aufgebaut sein können, verwendet. Derartige kompakte Folien auf der Basis von Polyolefinen sind z. B. in der DE 10018196 A1 beschrieben. Auch DE 10 2011 053224 A1 beschreibt ein Folienlaminat zur Verwendung als Innenverkleidungsteil eines Kraftfahrzeuges. Bei der Herstellung eines Innenverkleidungsteils eines Kraftfahrzeuges, beispielsweise einer Instrumententafel, wird die Folienkonstruktion zuerst im Positiv- oder Negativ-Tiefziehverfahren thermoformiert. Anschließend wird in einem zweiten Verarbeitungsschritt die so hergestellte "Haut" mit einem in der Regel PUR-basierten Schaum hinterschäumt und dieser Schaum mit einem stabilen Trägerteil verbunden.

Für Anwendungen und Bauteile, in denen das Folienlaminat in nachgeschalteten thermischen Umformprozessen einer geringen Verstreckung (z. B. < 200 %) unterworfen wird, können Folienlaminate mit mindestens einer geschäumten Schicht, so genannte Schaumfolienlaminate, eingesetzt werden. Diese bestehen aus einer ein- oder mehrlagigen Dekorschicht mit einer Lackschicht auf der Oberseite und einer Schaumschicht auf der Basis von Polyolefinen auf der Unterseite. Derartige Folienlaminate sind eingangs genannt. Bei der Herstellung eines Innenverkleidungsteils eines Kraftfahrzeuges, beispielsweise einer Instrumententafel, wird in diesem Fall das gesamte Schaumfolienlaminat zuerst im Positiv- oder Negativ-Tiefziehverfahren thermoformiert. Anschließend wird die so hergestellte "Schaumhaut" mit einem Kleber mit dem stabilen Trägerteil verbunden. Der Vorteil dieser zweitgenannten Schaumlaminate ist darin zu sehen, dass sie in einem einstufigen Prozess zu einem geformten, geschäumten Bauteil mit der durch den Schaum hervorgerufenen, gewünschten Weichheit (gewünschte Haptik) verarbeitet werden kann. Bei Verwendung der erstgenannten kompakten Folienkonstruktion ist dies nur mit einem dem Thermoformieren angeschlossenen Hinterschäumvorgang zu erzielen.

Die Folienlaminate werden verwendet, um in Thermoformierverfahren Bauteile für den automobilen Innenraum, u. a. Instrumententafeln, zu produzieren. Werden Folienlaminate in Bauteilen verwendet, die eine Airbagfunktion enthalten, müssen die Folienlaminate ein erforderliches Reißverhalten zeigen, wobei innerhalb von definierten Zeitvorgaben die Entfaltung des Airbags stattfinden muss, ein Partikelflug vermieden wird und der Schutz des Fahrgastes gewährleistet ist. Um dies zu gewährleisten, sieht der aktuelle Stand der Technik hierfür die rückseitige Schwächung (Sollbruchstelle) des Schaumfolienlaminates in der Regel mit Hilfe eines Laserschnittes vor. Diese eingebrachten Sollbruchstellen (Schwächungslinien) sind entweder direkt nach der Einbringung sichtbar oder werden im späteren Gebrauch des Bauteiles sichtbar. Diese Sichtbarkeit wurde als ausgeprägter optischer Mangel empfunden. Ferner fallen für die Beschaffung und das Betreiben der Maschinen für die Einbringung der Schwächungslinien zusätzliche Kosten an, weshalb Schaumfolienlaminate bisher nur in geringem Umfang für Bauteile mit Airbagfunktion eingesetzt werden.

Folienlaminate, umfassend zumindest eine ein- oder mehrlagig ausgebildete, extrudierte Dekorschicht mit einer Lackschicht auf der Oberseite und einer Schaumschicht auf der Unterseite, die für Armaturenbretter eingesetzt werden können und ohne zusätzliche Schwächungslinien auskommen sollen, sind aus der EP 2 117 881 B1 und WO 2016/008613 A1 bekannt. In der EP 2 117 881 B1 soll dabei die Deckschicht (Dekorschicht) mindestens zweilagig ausgebildet sein mit einer äußeren und einer inneren Lage, wobei die innere Lage und die geschäumte Schicht eine Reißdehnung aufweisen, die wesentlich unterhalb der Reißdehnung der äußeren Lage der Dekorschicht liegt. Außerdem werden für die innere Lage größere Werte der Reißdehnung bei Bruch in Längsrichtung als in Querrichtung offenbart. Es hat sich aber gezeigt, dass die in der EP 2 117 881 B1 genannten Folienlaminate nicht bei allen Geometrien der Airbag-Klappen einzusetzen waren, ohne dass zusätzliche Schwächungslinien eingebracht werden mussten. Ferner führte die Anwesenheit der inneren Schicht mit niedriger Reißdehnung innerhalb der Dekorschicht zum Teil zu einem schlechteren Tiefziehverhalten mit schlechterem Narbbild.

Der Erfindung liegt nun die Aufgabe zu Grunde, ein Folienlaminat bereitzustellen, welches als Innenverkleidungsteil von Kraftfahrzeugen, insbesondere im Bereich von Airbagabdeckungen, eingesetzt werden kann und ohne Schwächungslinien auskommt. Gleichzeitig soll das Folienlaminat im Tiefziehverfahren verarbeitet werden können, d. h., dass das Folienlaminat eine ausreichende Stabilität für thermische Umformprozesse mit einem Verstreckungsgrad bis zu 200 % aufweisen soll.

Gelöst wird die Aufgabe durch ein Folienlaminat des Anspruchs 1. Zusätzliche Merkmale ergeben sich aus den abhängigen Ansprüchen.

Bei einer Airbag-Auslösung, dem so genannten Airbag-Schuss, kommt es nach einem ersten Brechen der Dekorschicht zu einem Weiterreißen der Schicht in Längsrichtung der Herstellungsrichtung der extrudierten Folie, welches dann zur Öffnung einer beispielsweise rechteckigen Airbagklappe von einem Weiterreißen in Querrichtung gefolgt wird. Bei herkömmlichen Folienlaminaten sind die Weiterreißkräfte durch die durch die Extrusion der Folie gegebene Anisotropie in Längsrichtung geringer als in Querrichtung, so dass ein konturgetreues Reißen entlang der Airbagklappe nicht möglich ist. Dadurch, dass bei dem erfindungsgemäßen Folienlaminat die Weiterreißkräfte in Querrichtung in der gleichen Größenordnung wie die Weiterreißkräfte in Längsrichtung liegen und die Zugfestigkeiten auf dem geringen Niveau von 5 bis 20 N/mm² liegen, gelingt es überraschenderweise eine konturgetreue Öffnung der Airbagklappe zu erzielen, ohne dass eine vorherige Schwächung des Laminates mit Solbruchstellen vorgenommen werden muss. Hierdurch wird zum einen eine Sichtbarkeit der Schwächungslinie vermieden, welches als Makel im Design bewertet wird. Zum anderen werden beim Bauteilhersteller Kosten in Bezug auf die Beschaffung und das Betreiben von Maschinen zur Einbringung von Schwächungslinien vermieden.

Gemäß einer vorteilhaften Weiterbildung der Erfindung ist die Dekorschicht zweilagig aus einer äußeren Lage und einer inneren, der Schaumschicht benachbarten Lage ausgebildet. Dieser Aufbau ermöglicht eine bessere Anpassung der äußeren Lage an die gewünschte Haptik und Anmutung des Gesamtlaminates und die innere Lage kann hinsichtlich des Reißverhaltens weiter optimiert werden.

Für eine gute Tiefziehfähigkeit mit der gewünschten Zugfestigkeit bei gleichzeitig angenehmer Haptik hat es sich als vorteilhaft erweisen, wenn die Dekorschicht eine Dicke von 0,2 bis 1 mm aufweist.

Dazu kann die äußere Lage des Folienlaminates vorzugsweise eine Dicke von 0,1 bis 0,5 mm aufweisen und die innere, der geschäumten Schicht benachbarte Lage kann ebenfalls eine Dicke von 0,1 bis 0,5 mm aufweisen.

Die extrudierte Dekorschicht kann ein- oder mehrlagig aus Kunststoffschichten ausgebildet sein.

Der Kunststoff umfasst Polyethylen (PE), Polypropylen (PP) oder Mischungen von Polyethylen (PE) und Polypropylen (PP).

Unter Polyethylen (PE) werden hier solche Polymere oder Copolymere verstanden, deren Gewichtsanteil an Ethylen mehr als 50 Gew.-% beträgt. Unter Polypropylen (PP) werden hier solche Polymere oder Copolymere verstanden, deren Gewichtsanteil an Propylen mehr als 50 Gew.-% beträgt.

Im Kunststoff der Dekorschicht können übliche Additive, wie z. B. Gleitmittel, Stabilisatoren, Füllstoffe, wie anorganische Füllstoffe, und/oder Pigmente, enthalten sein.

Um das möglichst isotrope Verhalten hinsichtlich der Weiterreißkräfte mit einem Verhältnis von Längs- zu Querrichtung von 0,85 bis 1,2 zu erzielen, sind unterschiedliche Ansätze möglich.

Zum einen ist es möglich, dass die ein- oder mehrlagig ausgebildete Dekorschicht innerhalb zumindest einer Lage polare und unpolare Polymere enthält. Durch die unterschiedliche Polarität der Polymere mischen sich diese nicht homogen und nach der Extrusion der Folie liegen die polaren Polymere wie Kugeln in der unpolaren Matrix und schwächen so die Weiterreißkraft senkrecht zur Extrusionsrichtung. Als Beispiel sind hier polare Polymere in Kombination mit thermoplastischen Vulkanisaten (TPV), z. B. vernetztes EPDM, zu nennen.

Zum anderen kann die Annäherung an ein isotropes Weiterreißen durch die gezielte Kombination von hoch- und niedrigviskosen Polymeren mit einem Viskositäts/MFI-Unterschied von mehr als 6 g/10 min gemäß DIN EN ISO 1133 innerhalb zumindest einer Lage der Dekorschicht erfolgen. Dabei liegen die hochviskosen Polymere wie langgestreckte Inseln in der Matrix aus niedrigviskosen Polymeren. Hier sei als Beispiel eine Kombination von niedrig viskosem LDPE mit hoch viskosem PP genannt. Für PE erfolgt die Messung des MFI gemäß DIN EN ISO 1133 bei 190 °C/2,16 kg, für PP bei 230 °C/2,16 kg und für TPV bei 230 °C /10 kg.

Eine dritte Möglichkeit, die Weiterreißkräfte in Längs- und Querrichtung anzunähern, besteht darin, dass die ein- oder mehrlagig ausgebildete Dekorschicht innerhalb zumindest einer Lage Gas- oder Lufteinschlüsse, vorzugsweise in Form sphärischer Hohlkörper, enthält. Die Hohlkörper dienen als Störstellen für ein Reißen in Querrichtung. Es kann sich dabei z. B. um Glashohlkugeln handeln.

Die drei vorgenannten Lösungsansätze sind innerhalb eines Laminates sowohl jeweils in einer oder mehreren Lagen einsetzbar, als auch in jeglichen Kombinationen. Erfindungsgemäss wird der zweite und/oder der dritte Lösungsansatz eingesetzt.

So ist es beispielsweise möglich, dass sphärische Hohlkörper in einer Lage aus einem Gemisch aus hoch- und niedrigvikosen Polymeren vorliegen.

Die Schaumschicht des Folienlaminates kann auf den gleichen Kunststoffen basieren wie die Lagen der Dekorschicht, die unterscheidet sich aber durch die Schäumung und damit durch die Dichte von der Dekorschicht. Vorzugsweise handelt es sich um einen polyolefinbasierten Schaum. Die Schaumschicht des Folienlaminates kann sowohl chemisch durch Zusatz eines festen, chemischen Treibmittels in der Polymerzusammensetzung, als auch physikalisch geschäumt werden. Die Polymerzusammensetzung für die Schaumschicht kann weitere übliche Bestandteile, wie Treibmittel, Gleitmittel, Stabilisatoren, Füllstoffe, wie anorganische Füllstoffe, und/oder Pigmente enthalten.

Die Schaumschicht des Folienlaminates weist vorzugsweise eine Dicke von 0,5 bis 4 mm und eine Dichte von 40 bis 200 kg/m³ auf. Ein derartiges Folienlaminat lässt sich ohne Störungen in der Schaumschicht tiefziehen.

Das erfindungsgemäße Folienlaminat weist auf seiner glatten oder dreidimensional strukturierten Oberfläche der Dekorschicht eine Lackschicht auf. Die Lackschicht kann für die Verbesserung der Oberflächeneigenschaften, wie z. B. hinsichtlich der Optik oder der Kratzbeständigkeit, vorteilhaft sein. Die Lackschicht kann durch herkömmliche Maßnahmen auf die Oberfläche aufgebracht werden. Die Lackschicht ist vorzugsweise eine Polyurethan-Lackschicht.

Die Herstellung des Folienlaminates erfolgt nach üblichen Verfahren, wobei die Dekorschicht extrudiert und mit einer Lackschicht versehen wird. Die geschäumte Schicht wird vorzugsweise durch Schaumextrusion gebildet, wobei physikalisch (H₂O oder inerte Gase) oder unter Einsatz von chemischen Treibmitteln geschäumt werden kann. Die Schichten werden anschließend z. B. thermisch oder durch Verkleben zu einem flächigen Material verbunden, so dass ein Folienlaminat mit einer Dekorschicht und einer Schaumschicht entsteht. Es ist auch möglich, die Lackschicht nach dem Verbinden der beiden anderen Schichten aufzubringen.

Diese flächigen Laminate werden zu Bauteilen weiter verarbeitet.

Im Stand der Technik sind zur Formung von Bauteilen mit dreidimensional strukturierter Oberfläche verschiedene Verfahren bekannt. Ein Beispiel dafür ist das "In-Mould-Graining-Verfahren (IMG-Verfahren)", welches sich als Spezialverfahren aus dem Negativ-Tiefziehverfahren entwickelt hat. Dieses In-Mould-Graining-Verfahren, bisher im Wesentlichen mit seinem englischsprachigen Begriff bekannt, lässt sich wohl am besten mit dem Begriff "narbgebendes Negativtiefziehen" übersetzen. Im Gegensatz zum Standardtiefziehverfahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist dabei eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Das erfindungsgemäße Folienlaminat ist besonders geeignet für und ausgerichtet auf die Herstellung von Bauteilen mit dem IMG-Verfahren oder dem Positiv-Tiefziehverfahren.

Die hergestellten Laminate für das Positiv-Tiefziehverfahren können einem Vernetzungsschritt bevorzugt nach Einbringung der dreidimensionalen Oberflächenstruktur unterzogen werden, insbesondere der Elektronenstrahlvernetzung.

Die Vernetzung des Laminats kann mit energiereicher Strahlung, bevorzugt Elektronenstrahlung, erfolgen. Dies führt zu einer sehr guten Narbstabilität beim Positiv-Tiefziehen und zu sehr guten Tiefzieheigenschaften. Die Bestrahlung führt zu einer Vernetzung im Kunststoff.

Das Folienlaminat kann entsprechend einem Bauteil geformt sein, wobei die Bauteilform vorzugsweise erhältlich ist durch Aufbringen des Folienlaminats mit einem formgebenden Verfahrensschritt auf einen Träger, der der Bauteilform entspricht.

Vorzugsweise wird das Folienlaminat für die Beschichtung von Bauteilen für die Innenverkleidung von Kraftfahrzeugen, insbesondere mindestens im Bereich der Airbag-Abdeckungen oder im Bereich der Aufreißnähte der Airbag-Abdeckungen verwendet.

Überraschenderweise kann mit dem erfindungsgemäßen Folienlaminat im Tiefziehprozess ein Innenverkleidungsteil für Kraftfahrzeugen hergestellt werden, das ein Reißverhalten aufweist, das den Anforderungen bei einer Airbag-Öffnung genügt, ohne dass eine nachträgliche Schwächung des Folienlaminats bzw. Bauteils erfolgen muss. Auf die als Makel empfundenen Schwächungslinien kann verzichtet werden und die zusätzlichen Kosten für die Einbringung der Schwächungslinien (Maschinen, Arbeitskräfte, Arbeitszeit) entfallen.

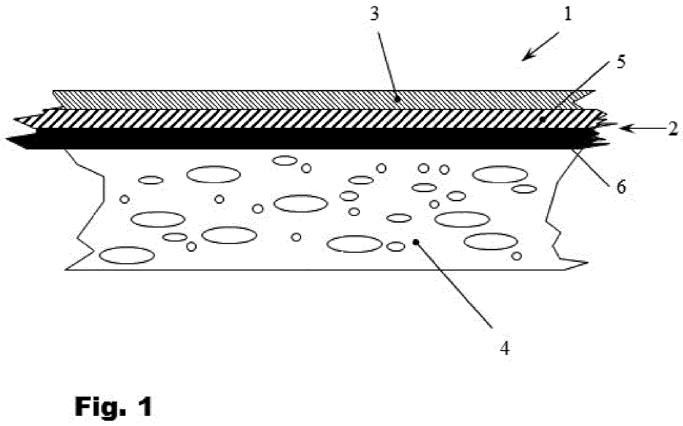

Die Erfindung wird nun anhand eines Ausführungsbeispiels näher erläutert, dabei zeigt die einzige Figur 1 schematisch das erfindungsgemäße Folienlaminat 1 mit einer zweilagig ausgebildeten Dekorschicht 2 mit einer äußeren Lage 5 und einer inneren, der Schaumschicht 4 benachbarten Lage 6. Auf der äußeren Lage 5 der Dekorschicht 2 befindet sich eine Lackschicht 3. Die Lackschicht 3 weist eine Dicke von 7 µm auf. Die äußere Lage 5 und die innere Lage 6 weisen eine Dicke von jeweils 0,4 mm auf und die Schaumschicht 4 ist 2 mm dick. Das Folienlaminat 1 ist mit einer geprägten dreidimensional strukturierten Oberfläche auf der Dekorschicht 2 versehen, also mit einer durch Walzprägung außen aufgeprägten Narbe.

Ein derartiges Folienlaminat kann für den Bereich von Airbag-Abdeckungen bei Innenverkleidungen von Kraftfahrzeugen verwendet werden, ohne dass Schwächungslinien vorgesehen werden müssen. Es kann im Tiefziehverfahren verarbeitet werden.

Es wurden Folienlaminate mit dem vorgenannten Schichtaufbau hergestellt, wobei die Lage 6 der Dekorschicht 2 gemäß Tabelle 1, 2 und 3 variiert wurde. Als äußere Lage 5 wurde stets eine Lage benutzt, die für das Positiv-Tiefziehverfahren geeignet war und die aus 33 Gew.-% PP, 33 Gew.-% Ethylpropylkautschuk und 33 Gew.-% EPDM (Gewichtsprozente bezogen auf die Polymere) bestand. Die Lackschicht 3 war stets ein Polyurethanlack, die Schaumschicht 4 war ein polyolefin-basierter Schaum mit einer Dichte von 67 kg/m³. Mit den Folienlaminaten wurden die Weiterreißkräfte in Extrusionsrichtung (Längsrichtung) und senkrecht zur Extrusionsrichtung (Querrichtung) gemäß DIN EN ISO 34 Methode B Verfahren b bei 23 °C und die Zugfestigkeiten gemäß DIN 527-3 Typ 5 mit 2000 mm/min bei 23 °C in Längs- und Querrichtung bestimmt. Erfindungsgemäße Laminate sind mit E, Vergleichslaminate mit V gekennzeichnet.

Bei in den Inhaltsstoffen handelte es sich um die Folgenden:
- TPV: PP/EPDM Blend mit 50 Gew.-% EPDM, MFI 15 g/10 min (230 °C/10 kg), Erweichungspunkt ca. 165 °C
- Polares Polymer: Polymilchsäure, Dichte 1,2 g/ccm³, Smp. 145-160 °C, MFI 19 g/10 min (230 °C/2,16 kg)
- Verträglichkeitsvermittler 1: Terpolymer auf Acrylatbasis
- Verträglichkeitsvermittler 2: hochviskoses LLD-PE (MFI 1 g/10 min (190 °C/2,16 kg))
- hochviskoses LDPE: Low density polyethylene, MFI = 1,9 g/10 min bei 190 °C/2,16 kg
- niedrigviskoses PP: Propylene homopolymer, MFI= 10,0 g/10 min bei 230 °C/2,16 kg, Schmelzefestigkeit 7 cN bei einer Dehngeschwindigkeit von 250 mm/s gemessen bei einer Temperatur von 200 °C
- niedrigviskoses LDPE: Low density polyethylene, MFI = 9 g/10 min bei 190 °C/2,16 kg
- hochviskoses PP: Propylene homopolymer, MFI= 1,0 g/10 min bei 230 °C/2,16 kg
- Glashohlkugeln, Durchmesser 35 µm

Der Schmelzflussindex (MFI, melt flow index), wie hier verwendet, wird gemäß DIN EN ISO 1133 bei einer Temperatur von 230 °C für PP bzw. 190 °C für PE und einer Last von 2,16 kg bestimmt. Der Schmelzflussindex (MFI) wird auch als Schmelze-Massefließrate (MFR) bezeichnet.

**Tabelle 1**

| **Bestandteile** | **Einheit** | **1(V)** | **2(V)** | **3(E)** | **4(E)** |
|---|---|---|---|---|---|
| TPV | Gew.-teile | 90 | 90 | 80 | 70 |
| Polares Polymer | Gew.-teile | 10 | 10 | 20 | 30 |
| Verträglichkeitsvermittler | Gew.-teile | - | 5 | 5 | 5 |

| **Eigenschaften** | | | | | |
|---|---|---|---|---|---|
| Weiterreißkraft längs | N | 8 | 10 | 11 | 12 |
| Weiterreißfkraft quer | N | 11 | 12 | 11 | 13 |
| Verhältnis der Weiterreißkräfte längs/quer | | 0,7 | 0,8 | 1 | 0,9 |
| Zugfestigkeit längs | N/mm² | 15 | 12 | 7 | 5 |
| Zugfestigkeit quer | N/mm² | 18 | 15 | 8 | 5 |

Gemäß Tabelle 1 wurden in der inneren Lage 6 der Dekorschicht zur Erreichung ähnlicher Weiterreißkräfte in Längs- und Querrichtung zwei nicht mischbare Polymere eingesetzt. Mit den Folienlaminaten 3(E) und 4(E) durchgeführte Airbagschüsse führten auch ohne Schwächungslinien zu einem guten Ergebnis.

**Tabelle 2**

| **Bestandteile** | **Einheit** | **5(V)** | **6(E)** | **7(V)** | **8(V)** | **9(E)** | **10(V)** |
|---|---|---|---|---|---|---|---|
| niedrig viskoses LDPE | Gew.-teile | 40 | 70 | 80 | - | - | - |
| hoch viskoses PP | Gew.-teile | 40 | 10 | 10 | - | - | - |
| hoch viskoses LDPE | Gew.-teile | - | - | - | 40 | 70 | 80 |
| niedrig viskoses PP | Gew.-teile | - | - | - | 40 | 10 | 10 |
| Verträglichkeitsverm. 2 | Gew.-teile | 20 | 20 | 10 | 20 | 20 | 10 |

| **Eigenschaften** | | | | | | | |
|---|---|---|---|---|---|---|---|
| Weiterreißkraft längs | N | 25 | 14 | 16 | 30 | 19 | 28 |
| Weiterreißkraft quer | N | 62 | 15 | 33 | 70 | 20 | 30 |
| Verhältnis der Weiterreißkräfte längs/quer | | 0,4 | 0,9 | 0,5 | 0,4 | 0,9 | 0,9 |
| Zugfestigkeit längs | N/mm² | 15 | 13,5 | 27 | 29 | 13 | 24 |
| Zugfestigkeit quer | N/mm² | 18 | 15 | 32 | 33 | 14 | 27 |

Gemäß Tabelle 2 wurden in der inneren Lage 6 der Dekorschicht zur Erreichung ähnlicher Weiterreißkräfte in Längs- und Querrichtung hoch und niedrigviskose Polymere nebeneinander eingesetzt. Mit den Folienlaminaten 6(E) und 9(E), durchgeführte Airbagschüsse führten auch ohne Schwächungslinien zu einem guten Ergebnis.

**Tabelle 3**

| **Bestandteile** | **Einheit** | **11(E)** |
|---|---|---|
| hoch viskoses LDPE | Gew.-teile | 97,5 |
| Glashohlkugeln | Gew.-teile | 2,5 |

| **Eigenschaften** | | |
|---|---|---|
| Weiterreißkraft längs | N | 26 |
| Weiterreißkraft quer | N | 27 |
| Verhältnis der Weiterreißkräfte längs/quer | | 0,9 |
| Zugfestigkeit längs | N/mm² | 9,2 |
| Zugfestigkeit quer | N/mm² | 11 |

Gemäß Tabelle3 wurden zur Erreichung ähnlicher Weiterreißkräfte in Längs- und Querrichtung Glashohlkugeln mit einem Durchmesser von 35 µm in das Polymer der inneren Lage 6 eingemischt. Mit dem Folienlaminat 11(E) durchgeführte Airbagschüsse führten auch ohne Schwächungslinien zu einem guten Ergebnis.

## Patentansprüche

1. Folienlaminat (1), umfassend zumindest eine ein- oder mehrlagig ausgebildete, extrudierte Dekorschicht (2) mit einer Lackschicht (3) auf der Oberseite und einer Schaumschicht (4) auf der Unterseite, wobei die Dekorschicht ein- oder mehrlagig aus Kunststoffschichten ausgebildet ist, wobei der Kunststoff Polyethylen (PE), Polypropylen (PP) oder Mischungen von Polyethylen (PE) und Polypropylen (PP) umfasst, **dadurch gekennzeichnet, dass** das Folienlaminat (1) eine Zugfestigkeit gemäß DIN 527-3 Typ 5 mit 2000 mm/min bei 23 °C von 5 bis 20 N/rnm2in Extrusionsrichtung und senkrecht zur Extrusionsrichtung aufweist und das Verhältnis der Weiterreißkraft des Folienlaminates (1) in Extrusionsrichtung zur Weiterreißkraft des Folienlaminates (1) senkrecht zur Extrusionsrichtung 0,85 bis 1,2 beträgt, wobei die Weiterreißkraft gemäß DIN EN ISO 34 Methode B Verfahren b bei 23 °C bestimmt wird, und wobei das Verhältnis der Weiterreißkraft des Folienlaminates (1) in Extrusionsrichtung zur Weiterreißkraft des Folienlaminates (1) senkrecht zur Extrusionsrichtung von 0,85 bis 1,2 dadurch erreicht wird, dass die ein- oder mehrlagig ausgebildete Dekorschicht (2) innerhalb zumindest einer Lage Polymere mit einem Viskositätsunterschied/MFI-Unterschied von mehr als 6 g/10 min enthält und/oder die ein- oder mehrlagig ausgebildete Dekorschicht (2) innerhalb zumindest einer Lage sphärische Hohlkörper enthält, wobei die die Messung des MFI jeweils gemäß DIN EN ISO 1133 für PE bei 190 °C/2,16 kg und für PP bei 230 °C/2,16 kg erfolgt.

2. Folienlaminat (1) nach Anspruch 1, **dadurch gekennzeichnet, dass** die Dekorschicht (2) zweilagig aus einer äußeren Lage (5) und einer inneren, der Schaumschicht (4) benachbarten Lage (6) ausgebildet ist.

3. Folienlaminat (1) nach Anspruch 1 oder 2, **dadurch gekennzeichnet, dass** die Dekorschicht (2) eine Dicke von 0,2 bis 1 mm aufweist.

4. Folienlaminat (1) nach Anspruch 2 oder 3, **dadurch gekennzeichnet, dass** die äußere Lage (5) eine Dicke von 0,1 bis 0,5 mm aufweist.

5. Folienlaminat (1) nach zumindest einem der Ansprüche 2 bis 4, **dadurch gekennzeichnet, dass** die innere, der geschäumten Schicht benachbarte Lage (6) eine Dicke von 0,1 bis 0,5 mm aufweist.

6. Folienlaminat (1) nach zumindest einem der vorhergehenden Ansprüche, **dadurch gekennzeichnet, dass** die Schaumschicht (4) eine Dicke von 0,5 bis 4 mm und eine Dichte von 40 bis 200 kg /m3aufweist.

7. Innenverkleidungsteil für Kraftfahrzeuge, vorzugsweise Armaturenbrett, welches zumindest im Bereich der Airbag-Abdeckungen oder im Bereich der Aufreißnähte der Airbag-Abdeckungen mit einem Folienlaminat (1) nach einem der Ansprüche 1 bis 6 versehen ist.

## Claims

1. Film laminate (1), comprising at least one or more layers, extruded decorative layer (2) with a varnish layer (3) on the upper side and a foam layer (4) on the underside, wherein the decorative layer is formed in one or more layers of plastic layers, wherein the plastic comprises polyethylene (PE), polypropylene (PP) or mixtures of polyethylene (PE) and polypropylene (PP), **characterized in that** the film laminate (1) has a tensile strength in accordance with DIN 527-3 Type 5 at 2000 mm/min at 23 °C from 5 to 20 N/rnm2 in the extrusion direction and perpendicular to the extrusion direction and the ratio of the tearing force of the film laminate (1) in the extrusion direction to the tearing force of the film laminate (1) perpendicular to the extrusion direction is 0.85 to 1.2, whereby the tearing force is determined in accordance with DIN EN ISO 34 Method B Method b at 23 °C, and wherein the ratio of the tearing force of the film laminate (1) in the extrusion direction to the tearing force of the film laminate (1) perpendicular to the extrusion direction of 0.85 to 1.2 is achieved by the fact that the single- or multi-layer decorative layer (2) contains polymers with a viscosity difference/MFI difference of more than 6 g/10 min within at least one layer and/or the single- or multi-layer decorative layer (2) contains spherical polymers within at least one layer. The MFI is measured in accordance with DIN EN ISO 1133 for PE at 190 °C/2.16 kg and for PP at 230 °C/2.16 kg.

2. A film laminate (1) according to claim 1, **characterized in that** the decorative layer (2) is formed in two layers consisting of an outer layer (5) and an inner layer (6) adjacent to the foam layer (4).

3. A film laminate (1) according to claim 1 or 2, **characterized in that** the decorative layer (2) has a thickness of 0.2 to 1 mm.

4. A film laminate (1) according to claim 2 or 3, **characterized in that** the outer layer (5) has a thickness of 0.1 to 0.5 mm.

5. Film laminate (1) according to at least one of claims 2 to 4, **characterized in that** the inner layer (6) adjacent to the foamed layer has a thickness of 0.1 to 0.5 mm.

6. A film laminate (1) according to at least one of the preceding claims, **characterized in that** the foam layer (4) has a thickness of 0.5 to 4 mm and a density of 40 to 200 kg/m3.

7. An interior trim part for motor vehicles, preferably a dashboard, which is provided with a film laminate (1) according to one of claims 1 to 6 at least in the area of the airbag covers or in the area of the tear seams of the airbag covers.

## Revendications

1. Film laminé (1), composé d'au moins une ou plusieurs couches, couche décorative extrudée (2) avec une couche de vernis (3) sur le dessus et une couche de mousse (4) en dessous, où la couche décorative est formée en une ou plusieurs couches de couches plastiques, le plastique comprenant du polyéthylène (PE), du polypropylène (PP) ou de mélanges de polyéthylène (PE) et de polypropylène (PP), **caractérisés par le fait que** le film (1) a une résistance à la traction conformément à la norme DIN 527-3 Type 5 à 2000 mm/min à 23 °C de 5 à 20 N/rnm2 dans la direction d'extrusion et perpendiculairement à la direction d'extrusion, et le rapport entre la force de déchirure du film laminé (1) dans la direction d'extrusion et la force de déchirure du film (1) perpendiculaire à la direction d'extrusion est de 0,85 à 1,2, la force de déchirure étant déterminée conformément à DIN EN ISO 34 Méthode B Méthode b à 23 °C, et où le rapport entre la force de déchirure du film laminé (1) dans la direction d'extrusion et la force de déchirure du film (1) perpendiculaire à la direction d'extrusion de 0,85 à 1,2 est obtenu **par le fait que** la couche décorative simple ou multicouche (2) contient des polymères avec une différence de viscosité/MFI supérieure à 6 g/10 min dans au moins une couche et/ou la couche décorative simple ou multicouche (2) contient des polymères sphériques dans au moins une couche. L'IMF est mesuré conformément à la norme DIN EN ISO 1133 pour la PE à 190 °C/2,16 kg et pour la PP à 230 °C/2,16 kg.

2. Un film laminé (1) selon l'affirmation 1, **caractérisé en ce que** la couche décorative (2) est formée en deux couches composées d'une couche extérieure (5) et d'une couche intérieure (6) adjacente à la couche de mousse (4).

3. Un film stratifié (1) selon la revendication 1 ou 2, **caractérisé par** une épaisseur de la couche décorative (2) de 0,2 à 1 mm.

4. Un film stratifié (1) selon la revendication 2 ou 3, **caractérisé par** la couche extérieure (5) ayant une épaisseur de 0,1 à 0,5 mm.

5. Le film stratifié (1) selon au moins une des revendications 2 à 4, **caractérisé par le fait que** la couche intérieure (6) adjacente à la couche mousseuse a une épaisseur de 0,1 à 0,5 mm.

6. Un film stratifié (1) selon au moins une des revendications précédentes, **caractérisé par** la couche de mousse (4) ayant une épaisseur de 0,5 à 4 mm et une densité de 40 à 200 kg/m3.

7. Une pièce de garniture intérieure pour les véhicules motorisés, de préférence un tableau de bord, qui est équipée d'un film laminé (1) selon l'une des revendications 1 à 6, au moins dans la zone des housses d'airbag ou dans la zone des jointures de déchirure des couvercles d'airbag.
